# EUROPEAN PATENT SPECIFICATION

(11) **EP 2 996 177 B1**
(45) Date of publication and mention of the grant of the patent: **25.03.2020**
(21) Application number: 14794959.8
(22) Date of filing: 09.05.2014
(51) Int. Cl.: H01M 2/02, H01M 10/052, H01M 10/058

(54) **DOUBLE POUCH FOR SECONDARY BATTERY FOR IMPROVING SAFETY AND SECONDARY BATTERY USING SAME**
DOPPELBEUTEL ZUR SICHERHEITSERHÖHUNG FÜR EINE SEKUNDÄRBATTERIE UND SEKUNDÄRBATTERIE DAMIT
POCHETTE DOUBLE POUR BATTERIE RECHARGEABLE PERMETTANT D'AMÉLIORER LA SÉCURITÉ ET BATTERIE RECHARGEABLE UTILISANT UNTE TELLE POCHETTE

(30) Priority: 10.05.2013 KR 20130053028
(43) Date of publication of application: 16.03.2016
(73) Proprietor: LG Chem, Ltd., Seoul 150-721 (KR)
(72) Inventor: KIM, Hyeong-Seok, Daejeon 305-380 (KR)
(74) Representative: Plasseraud IP
(86) International application number: PCT/KR2014/004121
(87) International publication number: WO 2014/182102

(56) References cited:
- JP-A- 2005 054 155
- KR-A- 20000 039 287
- KR-A- 20120 120 018
- KR-A- 20130 004 153
- KR-A- 20130 024 596
- US-A1- 2007 065 718
- US-A1- 2011 212 361
- US-A1- 2013 071 696

## Description

### Technical Field

The present invention relates to a double pouch for a secondary battery for improving safety and, more particularly, to a double pouch for a secondary battery, including a safety member therein.

### Background Art

With the technological development of mobile devices and the increasing demand thereof, batteries are extensively used as energy sources. Accordingly, thorough research is ongoing into batteries able to cope with a variety of requirements.

Typically, there are high needs for, in terms of battery shape, square and pouch type secondary batteries that are thin and may thus be applied to products such as mobile phones. In terms of battery material, lithium secondary batteries such as lithium ion batteries and lithium ion polymer batteries having high energy density, discharge voltage, and output safety are primarily used.

One of the major research themes in these secondary batteries is to improve safety. Generally, lithium secondary batteries may explode due to high temperature and high pressure therein resulting from abnormal operation states thereof such as an internal short, overcharging exceeding allowable current and voltage, exposure to high temperature, and a shock due to dropping. In particular, batteries for cars have to possess large capacity, but are problematic because of poor safety in proportion to large capacity.

Improvements in safety of the batteries are under active study. For example, Korean Patent Application Publication No. 2012-0132341 discloses a safety member for a secondary battery, which may maximally absorb generated heat to prevent ignition of the battery. Although this patent provides a method able to prevent ignition by absorbing heat, it cannot cope with the case where ignition occurs due to a shock. US2011212361 discloses a pouch having a layered structure wherein the two layers may be joined by a flame retardant adhesive.

### Disclosure

### Technical Problem

The present invention has been made keeping in mind the above problems in the related art, and an object of the present invention is to provide a double pouch for a secondary battery for improving safety according to claim 1, which may prevent ignition of the battery even when the inside of the battery reaches a high temperature due to the abnormal operation of the battery, such as in the case of an internal short, overcharging, exposure to high temperature, and a shock.

### Technical Solution

In order to accomplish the above object, the present invention provides a double pouch for a secondary battery, including a safety member.

In addition, the present invention provides a double pouch type secondary battery, comprising: a cathode including a cathode active material and a cathode current collector; an anode including an anode active material and an anode current collector; a separator; and a double pouch receiving the cathode, the anode and the separator and including a safety member therein.

### Advantageous Effects

According to the present invention, a double pouch for a secondary battery includes a safety member composed of a flame-retardant material. Even when the inside of the battery reaches a high temperature due to the abnormal operation of the battery, such as in the case of an internal short, overcharging, exposure to high temperature, and a shock, such a safety member melts first due to the high temperature, thereby preventing ignition of the battery.

### Description of Drawings

FIG. 1 illustrates a structure of a conventional pouch type battery; and
FIG. 2 illustrates a structure of a double pouch type battery according to the present invention.

### Best Mode

Hereinafter, a detailed description will be given of the present invention.

According to the present invention, a double pouch for a secondary battery includes a safety member.

The safety member is provided in the form of block outside the double pouch for a secondary battery. When the safety member is provided in the form block outside the double pouch for a secondary battery, one or more sides of an electrode assembly are covered with the safety member having a size corresponding thereto and then further enclosed with a pouch, excluding the safety member.

As for the double pouch, a substrate of the pouch, excluding the safety member, is used for a secondary battery, and is not particularly limited so long as it stably protects the safety member while not inducing chemical actions. Preferable examples thereof include polyethylene, polypropylene, and polyurethane, and more preferably, aluminum is provided therein.

A resin for the safety member is not particularly limited so long as it has a melting point of 80°C or more. A flame-retardant resin having a melting point of 80°C or more is preferably used. More preferably useful is a flame-retardant resin comprising at least one flame-retardant elastomer resin with a melting point of 80°C or more. The flame-retardant elastomer resin incudes any one or more selected from the group consisting of an ethylene-propylene-diene monomer elastomer, and an ethylene-vinyl acetate copolymer.

According to the present invention, the safety member may further include a flame-retardant solution therein. When the safety member includes the flame-retardant solution therein, the flame-retardant solution may flow into the battery and may thus prevent fires even in the case of an internal short of the battery due to a shock outside the pouch, for example, a shock such as nail penetration. The flame-retardant solution is not particularly limited so long as it is a flame-retardant gel. For example, a phosphoric acid ester-based flame-retardant gel may be used.

Also, the double pouch according to the present invention may be provided in the form of at least two layers. As such, the pouch may further include a metal layer, thus enhancing insulating properties and stretching strength of the pouch. Useful is at least one metal of aluminum and silicon oxide.

According to the present invention, a double pouch type secondary battery includes a cathode comprising a cathode active material and a cathode current collector; an anode comprising an anode active material and an anode current collector; a separator; and a double pouch receiving the cathode, the anode and the separator, wherein the double pouch for a secondary battery includes a safety member.

In the present invention, the cathode may be manufactured by applying a mixture comprising a cathode active material, a conductor and a binder on a cathode current collector and then drying it. The mixture may further include a filler, as necessary. Examples of the cathode active material may include, but are not limited to, a layered compound such as lithium cobalt oxide (LiCoO₂) or lithium nickel oxide (LiNiO₂), or a compound substituted with one or more transition metals; lithium manganese oxide such as a compound represented by Li₁₊ₓMn₂₋ₓO₄ (wherein x is 0 ∼ 0.33), LiMnO₃, LiMn₂O₃, and LiMnO₂; lithium copper oxide (Li₂CuO₂); vanadium oxide such as LiV₃O₈, V₂O₅, or Cu₂V₂O₇; Ni site type lithium nickel oxide represented by LiNi₁₋ₓMₓO₂ (wherein M = Co, Mn, Al, Cu, Fe, Mg, B or Ga, x = 0.01 ∼ 0.3); lithium manganese composite oxide represented by LiMn₂₋ₓMₓO₂ (wherein M = Co, Ni, Fe, Cr, Zn or Ta, x = 0.01 ∼ 0.1) or Li₂Mn₃MO₈ (wherein M = Fe, Co, Ni, Cu or Zn); LiMn₂O₄ with a portion of Li being substituted with an alkaline earth metal ion; a disulfide compound; and Fe₂(MoO₄)₃.

The cathode current collector is typically formed to a thickness of 3 ∼ 500 µm. Such a cathode current collector is not particularly limited so long as it has high conductivity without inducing chemical changes in the corresponding battery. For example, useful is stainless steel, aluminum, nickel, titanium, calcined carbon, or aluminum or stainless steel surface-treated with carbon, nickel, titanium or silver. The current collector has fine roughness on the surface thereof, thus enhancing adhesion of the cathode active material, and may be provided in various forms, such as a film, a sheet, a foil, a net, a porous body, a foamed body, and a nonwoven fabric.

The binder assists bonding of the active material and the conductor and bonding to the current collector, and is typically added in an amount of 1 ∼ 50 wt% based on the total weight of the cathode mixture. The binder may include a high-molecular-weight polyacrylonitrile-acrylic acid copolymer, but is not limited thereto. The other examples thereof may include polyvinylidene fluoride, polyvinylalcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM), sulfonated EPDM, styrene butylene rubber, fluoro rubber, and various copolymers.

The conductor has conductivity without inducing chemical changes in the corresponding battery, and may be added in an amount of 1 ∼ 50 wt% based on the total weight of the cathode mixture. Examples thereof may include graphite such as natural graphite or artificial graphite; carbon black such as carbon black, acetylene black, ketjen black, channel black, furnace black, lamp black, and summer black; conductive fibers such as carbon fibers or metal fibers; metal powder such as carbon fluoride, aluminum, and nickel powder; conductive whiskey such as zinc oxide or potassium titanate; conductive metal oxide such as titanium oxide; and a conductive polymer such as a polyphenylene derivative. The cathode may optionally include a filler to inhibit expansion.

The filler is not particularly limited so long as it is a fibrous material that does not induce chemical changes in the corresponding battery, and examples thereof may include olefin polymers such as polyethylene and polypropylene; and fibrous materials such as glass fibers and carbon fibers.

In the present invention, the anode may be obtained by applying a mixture comprising an anode active material, a binder and a conductor on an anode current collector and then drying a solvent.

Examples of the anode active material may include carbon and graphite materials, such as natural graphite, artificial graphite, expanded graphite, carbon fibers, non-graphitizable carbon, carbon black, carbon nanotubes, fluorene, and activated carbon; metals alloyable with lithium, such Al, Si, Sn, Ag, Bi, Mg, Zn, In, Ge, Pb, Pd, Pt, and Ti, and compounds including such elements; composite compounds of metal or metal compounds and carbon or graphite materials; and lithium-containing nitrides.

According to the present invention, the anode active material may further include a conductor and/or a filler to enhance the conductivity of the anode active material. A description of the conductor and the filler is the same as in the cathode described above.

The anode current collector typically has a thickness of about 3 ∼ 500 µm. The anode current collector is not particularly limited so long as it is conductive without inducing chemical changes in the corresponding battery, and examples thereof may include copper, stainless steel, aluminum, nickel, titanium, calcined carbon, copper or stainless steel surface-treated with carbon, nickel, titanium or silver, and aluminum-cadmium alloys. As with the cathode current collector, the anode current collector has fine roughness on the surface thereof to thus enhance bondability of the anode active material, and may be provided in various forms, such as a film, a sheet, a foil, a net, a porous body, a foamed body, and a nonwoven fabric.

In the present invention, the separator is disposed between the cathode and the anode, and is a thin film having insulating properties with high ion permeability and mechanical strength. The separator typically has a pore diameter of 0.01 ∼ 10 µm and a thickness of 5 ∼ 300 µm. Such a separator may be provided in the form of a sheet or nonwoven fabric using an olefin polymer such as polypropylene having chemical resistance and hydrophobicity or using glass fibers or polyethylene. When a solid electrolyte such as a polymer is used as the electrolyte, it may also function as the separator.

The separator may have a weight average molecular weight of 1,000 ∼ 20,000. If the molecular weight thereof falls out of the above range, it is difficult to ensure appropriate tensile strength and elongation.

According to the present invention, the double pouch type secondary battery further includes a lithium salt-containing non-aqueous electrolyte, in addition to the cathode, the anode and the separator.

The lithium salt-containing non-aqueous electrolyte may be composed of a non-aqueous electrolyte and lithium. The non-aqueous electrolyte may be exemplified by a non-aqueous electrolyte solution, an organic solid electrolyte, and an inorganic solid electrolyte.

Examples of the non-aqueous electrolyte solution may include aprotic organic solvents, such as N-methyl-2-pyrrolidinone, propylene carbonate, ethylene carbonate, butylene carbonate, dimethyl carbonate, diethyl carbonate, gamma-butyrolactone, 1,2-dimethoxyethane, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

Examples of the organic solid electrolyte may include polyethylene derivatives, polyethylene oxide derivatives, polypropylene oxide derivatives, phosphoric acid ester polymers, poly agitation lysine, polyester sulfide, polyvinylalcohol, polyvinylidene fluoride, and polymers having ionic dissociation groups.

Examples of the inorganic solid electrolyte may include Li nitrides, halides, and sulfates, such as Li₃N, Lil, Li₅NI₂, Li₃N-LiI-LiOH, LiSiO₄, LiSiO₄-LiI-LiOH, Li₂SiS₃, Li₄SiO₄, Li₄SiO₄-LiI-LiOH, and Li₃PO₄-Li₂S-SiS₂.

The lithium salt may be easily dissolved in the non-aqueous electrolyte, and examples thereof may include LiCl, LiBr, Lil, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium, lithium lower aliphatic carboxylate, and lithium tetraphenyl borate.

Also, in order to improve charge/discharge properties and flame retardancy, the non-aqueous electrolyte may be added with, for example, pyridine, triethylphosphite, triethanolamine, cyclic ether, ethylene diamine, n-glyme, triamide hexaphosphate, nitrobenzene derivatives, sulfur, quinone imine dyes, N-substituted oxazolidinone, N,N-substituted imidazolidine, ethyleneglycol dialkylether, ammonium salt, pyrrole, 2-methoxy ethanol, and aluminum trichloride. In some cases, a halogen-containing solvent such as carbon tetrachloride or ethylene trifluoride may be further added to impart nonflammable properties, and also carbon dioxide gas may be further added to enhance high-temperature retention properties.

### Mode for Invention

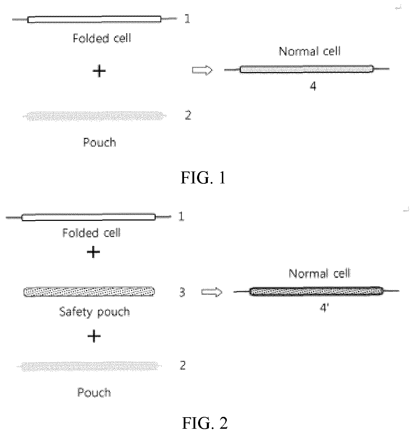

As illustrated in FIG. 1, a conventional secondary battery 4 is manufactured by simply enclosing an electrode assembly 1 comprising a cathode, an anode and a separator with a pouch 2. However, this battery is problematic because it does not include a device able to prevent ignition of the battery when the inside of the electrode assembly reaches a high temperature.

However, as illustrated in FIG. 2, a secondary battery 4' according to the present invention is manufactured in such a manner that, before an electrode assembly 1 comprising a cathode, an anode and a separator is enclosed with a pouch 2, the electrode assembly is enclosed once or several times with a safety member 3, or one or more sides of the electrode assembly are covered with the safety member having a size corresponding thereto and then further enclosed with a pouch 2, excluding the safety member. Accordingly, when the inside of the battery according to the present invention reaches a high temperature of 80°C or more due to abnormal operation of the battery, the flame-retardant resin of the safety member 3 around the electrode assembly 1 melts and thus flows therein, or fires may be prevented from spreading to the outside due to the flame-retardant resin, thereby preventing ignition of the electrode assembly 1. Hence, the secondary battery 4' according to the present invention may be prevented from being ignited even when the inside of the electrode assembly 1 reaches a high temperature.

Although the embodiments of the present invention have been disclosed for illustrative purposes with reference to the drawings, those skilled in the art will appreciate that various modifications, additions and substitutions are possible, without departing from the scope of the invention as disclosed in the accompanying claims.

### <Description of the Reference Numerals in the Drawings>

1: electrode assembly
2: pouch
3: safety member
4,4': secondary battery

## Claims

1. A double pouch for a secondary battery comprising a pouch and a safety member, **characterized in that**
the safety member is provided in the form of a block in such a manner that one or more sides of an electrode assembly are covered with the safety member having a size corresponding thereto and the other sides of the electrode assembly are enclosed with the pouch excluding the safety member,
the safety member comprises a resin having a melting point of 80°C or more,
the resin having a melting point of 80°C or more is a flame-retardant resin,
the flame-retardant resin comprises at least one flame-retardant elastomer resin, and
the flame-retardant elastomer resin is any one or more selected from the group consisting of an ethylene-propylene-diene monomer elastomer and an ethylene-vinyl acetate copolymer.

2. The double pouch of claim 1, wherein the safety member further comprises a flame-retardant liquid therein.

3. The double pouch of claim 2, wherein the flame-retardant liquid is a phosphoric acid ester-based flame-retardant gel.

4. The double pouch of claim 1, wherein the safety member has a thickness greater than a thickness of a single sheet of a cathode and less than a thickness of an electrode assembly.

5. The double pouch of claim 1, wherein the double pouch is provided in at least two layers.

6. The double pouch of claim 1, wherein the double pouch further comprises a metal layer.

7. The double pouch of claim 6, wherein the metal layer comprises at least one of aluminum and silicon oxide.

8. A double pouch type secondary battery, comprising:
a cathode comprising a cathode active material and a cathode current collector;
an anode comprising an anode active material and an anode current collector;
a separator; and
the double pouch of claim 1.

## Patentansprüche

1. Doppelbeutel für eine Sekundärbatterie, umfassend einen Beutel und ein Sicherheitselement,
**dadurch gekennzeichnet, dass**
das Sicherheitselement in einer derartigen Weise in der Form eines Blocks bereitgestellt ist, dass eine oder mehrere Seiten einer Elektrodenanordnung mit dem Sicherheitselement bedeckt sind, welches eine dazu korrespondierende Größe aufweist, und, das Sicherheitselement ausgenommen, die anderen Seiten der Elektrodenanordnung mit dem Beutel umschlossen sind,
das Sicherheitselement ein Harz umfasst, welches einen Schmelzpunkt von 80 °C oder mehr aufweist,
das Harz, welches einen Schmelzpunkt von 80 °C oder mehr aufweist, ein flammhemmendes Harz ist,
das flammhemmende Harz wenigstens ein flammhemmendes elastomeres Harz umfasst und
das flammhemmende elastomere Harz eines ist oder mehrere, ausgewählt aus der Gruppe, bestehend aus Ethylen-Propylen-Diene-Monomer-Elastomer und Ethylen-Vinylacetat-Copolymer.

2. Doppelbeutel nach Anspruch 1, wobei das Sicherheitselement ferner eine flammhemmende Flüssigkeit darin umfasst.

3. Doppelbeutel nach Anspruch 2, wobei die flammhemmende Flüssigkeit ein auf Phosphorsäureester basiertes flammhemmendes Gel ist.

4. Doppelbeutel nach Anspruch 1, wobei das Sicherheitselement eine Dicke aufweist, welche größer als eine Dicke einer einzelnen Lage einer Kathode und geringer als eine Dicke einer Elektrodenanordnung ist.

5. Doppelbeutel nach Anspruch 1, wobei der Doppelbeutel in wenigstens zwei Schichten bereitgestellt ist.

6. Doppelbeutel nach Anspruch 1, wobei der Doppelbeutel ferner eine Metallschicht umfasst.

7. Doppelbeutel nach Anspruch 6, wobei die Metallschicht wenigstens eines aus Aluminium und Siliziumoxid umfasst.

8. Sekundärbatterie vom Doppelbeutel-Typ, umfassend:
eine Kathode, welche ein Kathoden-Aktivmaterial und einen Kathoden-Stromkollektor umfasst;
eine Anode, welche ein Anoden-Aktivmaterial und einen Anoden-Stromkollektor umfasst;
einen Separator; und
den Doppelbeutel nach Anspruch 1.

## Revendications

1. Pochette double pour une batterie rechargeable comprenant une pochette et un élément de sécurité,
**caractérisée en ce que**
l'élément de sécurité se présente sous la forme d'un bloc d'une manière telle qu'un ou plusieurs côtés d'un ensemble électrode sont recouverts de l'élément de sécurité ayant une taille qui correspond à ce(s) côté(s) et les autres côtés de l'ensemble électrode sont enfermés par la pochette à l'exclusion de l'élément de sécurité,
l'élément de sécurité comprend une résine ayant un point de fusion de 80 °C ou plus, la résine ayant un point de fusion de 80 °C ou plus est une résine retardatrice de flamme,
la résine retardatrice de flamme comprend au moins une résine élastomère retardatrice de flamme, et
la résine élastomère retardatrice de flamme est un ou plusieurs quelconques sélectionnés à partir du groupe constitué d'un élastomère monomère d'éthylène-propylène-diène et d'un copolymère d'éthylène-acétate de vinyle.

2. Pochette double selon la revendication 1, dans laquelle l'élément de sécurité comprend en outre un liquide retardateur de flamme dans celui-ci.

3. Pochette double selon la revendication 2, dans laquelle le liquide retardateur de flamme est un gel retardateur de flamme à base d'ester d'acide phosphorique.

4. Pochette double selon la revendication 1, dans laquelle l'élément de sécurité présente une épaisseur supérieure à une épaisseur d'une feuille unique d'une cathode et inférieure à une épaisseur d'un ensemble électrode.

5. Pochette double selon la revendication 1, dans laquelle la pochette double est ménagée dans au moins deux couches.

6. Pochette double selon la revendication 1, dans laquelle la pochette double comprend en outre une couche métallique.

7. Pochette double selon la revendication 6, dans laquelle la couche métallique comprend au moins l'un parmi l'aluminium et l'oxyde de silicium.

8. Batterie rechargeable de type à pochette double, comprenant :
une cathode comprenant un matériau actif de cathode et un collecteur de courant de cathode ;
une anode comprenant un matériau actif d'anode et un collecteur de courant d'anode ;
un séparateur ; et
la pochette double selon la revendication 1.
